# EUROPEAN PATENT APPLICATION

(11) **EP 1 747 711 A1**
(43) Date of publication of application: **31.01.2007**
(21) Application number: 05425546.8
(22) Date of filing: 26.07.2005
(51) Int. Cl.: A01G 3/037, B26B 15/00

(54) **Cutting device**

(71) Applicant: Cecchi, Daniela, 71100 Foggia (IT); Cecchi, Marco, 71100 Foggia (IT); Cecchi, Sabrina, 71100 Foggia FG (IT)
(72) Inventor: Cecchi, Daniela, 71100 Foggia (IT); Cecchi, Marco, 71100 Foggia (IT); Cecchi, Sabrina, 71100 Foggia FG (IT)
(74) Representative: Leone, Mario

(57) **Abstract**

The present invention relates to a cutting device, in particular intended for pruning branches, tendrils, bushes, etc., which is particularly easy to handle and comprises a cutting unit (2; 102); a main body having a housing portion (3; 103) apt to house transmission members (9, 10, 11; 109, 110, 111) for moving said cutting unit (2; 102), and a handgrip portion (4; 104), wherein said handgrip portion (4; 104) is physically distinct from said housing portion (3; 103).

## Description

The present invention relates to a cutting device, in particular intended for pruning branches, tendrils, bushes, etc., therefore to be used mainly in agriculture and/or for gardening. Hence, the device according to the present invention finds useful employ in the manufacturing of machines intended for the agricultural field, e.g. for olive-, wine-, fruit-growing; and for the nursery and the forestry fields.

The pruning, or anyhow the tending to plants requiring the cutting of branches, are usually carried out with the use of shears or scissors.

Such implements are known in several shapes and dimensions, depending on the typology of work to be carried out, of a manually operated type as well as of a non-manually operated type.

Evidently, manually operated implements entail the well-known drawbacks or requiring remarkable physical efforts and of a user's tiring, especially when used over lengthy periods of time. Moreover, the use of manually operated devices is not always possible; suffice it to consider situations in which there have to be cut branches in locations not easily reachable even by using ladders.

Some of these drawbacks are reduced or eliminated through the use of mechanized cutting apparatuses, powered electrically, mechanically, etc.

However, even mechanized apparatuses, at least the known ones, entail some drawbacks making them not always directly usable in lieu of the manually operated ones.

In particular, it has to be noted that surely a mechanized cutting apparatus is bulkier and heavier than an equivalent manually operated one, necessarily having to provide moving mechanisms, motors, powering devices, etc.

Moreover, an objective difficulty in handling such an implement is linked, above all, to its weight and dimensions, but also to the relative arrangement of its component parts, often making such implements cumbersome to hold and impossible to handle with a single hand, especially when in motion. All this often, e.g., when the operator is already precariously balanced (on a ladder, etc.) makes them useless.

Hence, object of the present invention is to overcome such problems and drawbacks of the devices known to date. Such problems are overcome by a cutting device according to the present invention, as defined in the independent claim 1.

Further features of the present invention are defined in the corresponding dependent claims.

The cutting device subject-matter of the present invention entails several advantages with respect to analogous devices of the known art.

Firstly, the device according to the present invention can be manufactured according to different embodiments; each embodiment, though preserving the same inventive concept, has peculiar features making it particularly advantageous for a specific use in a predetermined operation mode. In practice, there are different configurations of the device according to the present invention, enabling its use under various conditions.

The main advantage of the present invention lies in that the component parts of the device itself are designed and connected thereamong in a manner such as to provide an implement that is always easy to handle, well-balanced and safely usable under any circumstance.

Further advantages, as well as the features and the operation modes of the present invention will be made apparent in the following detailed description of preferred embodiments thereof, given by way of a non-limiting example and making reference to the figures of the annexed drawings, wherein:
* figure 1 is a partially sectional perspective view of a first embodiment of a cutting device according to the present invention;
* figure 2 is an assembly view of a cutting apparatus employing the device of figure 1;
* figures 3A, 3B and 3C exemplarily illustrate different modes of use of the apparatus of figure 2; and
* figure 4 is a perspective view of a second embodiment of a cutting device according to the present invention.

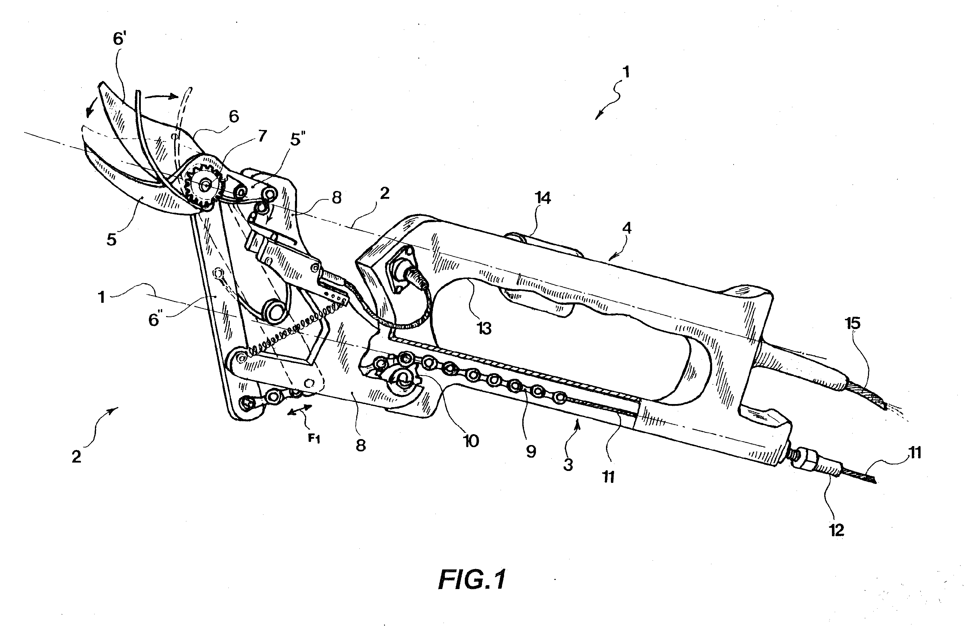

Hereinafter, reference will be made to the above-indicated figures. In particular, figure 1 shows, in a partially sectional view, a first embodiment of a cutting device 1 according to the present invention.

The device 1 according to the present invention is schematically divisible into a few main portions. In particular, there can be recognized a cutting unit 2 and a main body comprising a housing portion 3 apt to house transmission members 9, 10, 11 for transmitting motion, which will be described hereinafter, and a handgrip and control portion 4.

The cutting unit 2, preferably shaped like a scissor or a shear, comprises two arms 5 and 6. The two arms are hinged therebetween at a fulcrum pin 7.

The arm 5 is a stationary arm having a sharp cutting portion 5' cooperating with a corresponding sharp cutting portion 6' of the arm 6, which instead is the movable arm of the cutting unit 2.

Hence, the end 5" of the stationary arm 5 is rigidly connected to a support 8 obtained onto the housing portion 3, whereas the end 6" of the movable arm 6 is mechanically connected to a motor (not shown in figure 1) by means of the members for transmitting motion.

Therefore, said members 9, 10, 11 are suitable for transmitting a reciprocating motion to the arm 6, as indicated by arrow F1 in figure 1, to which there corresponds a cutting motion of the sharp portions of the scissor.

The operation of the cutting motion is controlled by the user, via a control device 14 located on a handgrip handle 13 obtained into the handgrip portion 4.

The control device 14, e.g. a switch, suitably controls the operation of the motor in a manner such that, by means of the transmitting members, the cutting unit carries out a full cutting cycle.

The arrangement of the parts constituting the device 1 is such as to functionally separate them, though obviously they are joined and connected thereamong. In particular, the handgrip portion 4 is totally distinct, physically and functionally, from the cutting unit 2 and above all from the housing portion for the transmission members 3.

Moreover, to the ends of the present invention, also the mutual arrangement of said parts assumes a specific importance.

It may be observed that the geometry adopted is such as to substantially create two parallel lines L1, L2.

The transmission of motion takes place along line L1, from a motor to the arm 6 of the scissor 2, whereas along line L2 there are arranged the handgrip portion 4 and the fulcrum 7 of the scissor 2.

Of course, this arrangement is not random, nor is it selected as any one alternative equivalent to other solutions. On the contrary, such an arrangement has been specifically designed in a manner such as to optimize the operation of the device according to the present invention.

In fact, it has to be pointed out that the motion of the transmission members 9, 10, 11 is substantially a reciprocating one, translational along the direction of L1. Accordingly, the entire device will be subject to vibration and stresses along said direction.

First of all, the physical separation of the handgrip portion with respect to the body of the device, and in particular of the portion housing the transmission members, provides an ergonomic handgrip handle, therefore easy to hold and less subject to vibrations.

Moreover, the manufacturing of the handgrip 4 along the line L2, parallel to L1, allows the user to better absorb the vibrations and/or the stresses. In fact, any other arrangement, from the most commonly adopted one (orthogonal to the direction of L1) to other positions of the handgrip handle, causes anyhow high stresses to the same user's arm and to his/her joints.

In addition, the arrangement is such that also the fulcrum 7 is arranged just along the handgrip line L2, frontally to the handgrip itself.

This entails the advantageous outcome that the user, by holding the device, can easily exert a thrust force aimed to the cutting unit 2, a force that is maximal just along the line L2. This derives from a more natural motion, with no need to use both hands and thus entailing an easier and more effective cutting, above all less tiring for the user.

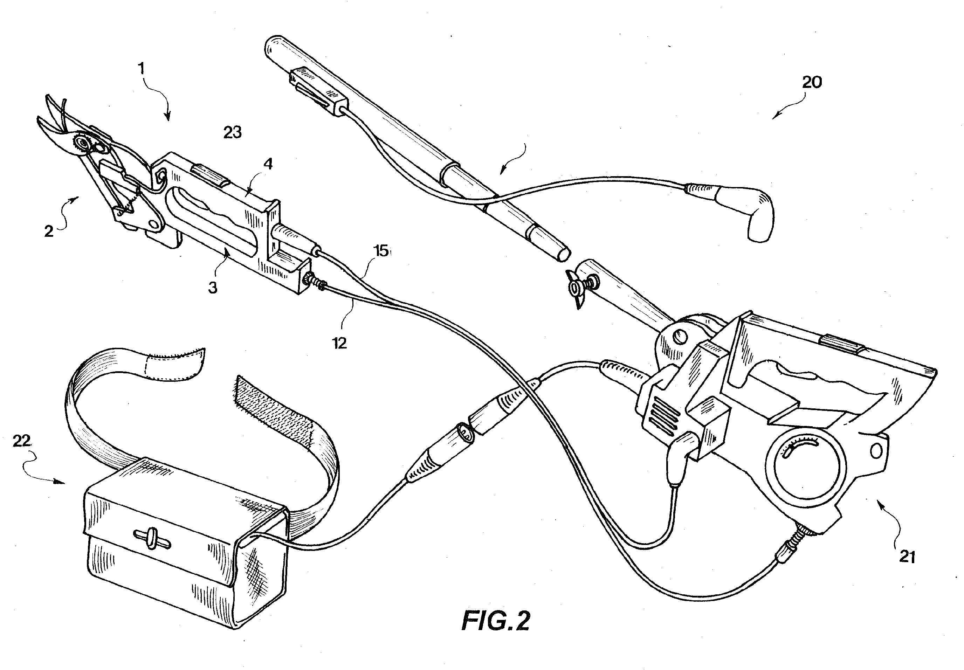

Next, figure 2 is an overall view of a cutting apparatus 20 using a cutting device 1 according to the present invention, as the one described hereto.

In particular, the apparatus 20 comprises a power unit 21, e.g., of electric type, powered by a battery pack 22.

A cutting device 1 is connected to the power unit 21, through means for the electrical and mechanical connection, respectively by connectors and an electric cable 15, and by a sheathed cable 11, 12.

The electrical connection is required for the remote operation/turning off of the motor, whereas the mechanical connection is for the transmission of the reciprocating motion from the power unit to the cutting unit 2.

Without going into details, evidently the power unit should provide means for the transforming of a rotary motion (peculiar to an electric motor) into translational motion.

Evidently, the power unit could make use of propellers of different kind, e.g., mechanical, pneumatic, hydraulic, etc., entailing no alteration of the inventive concept.

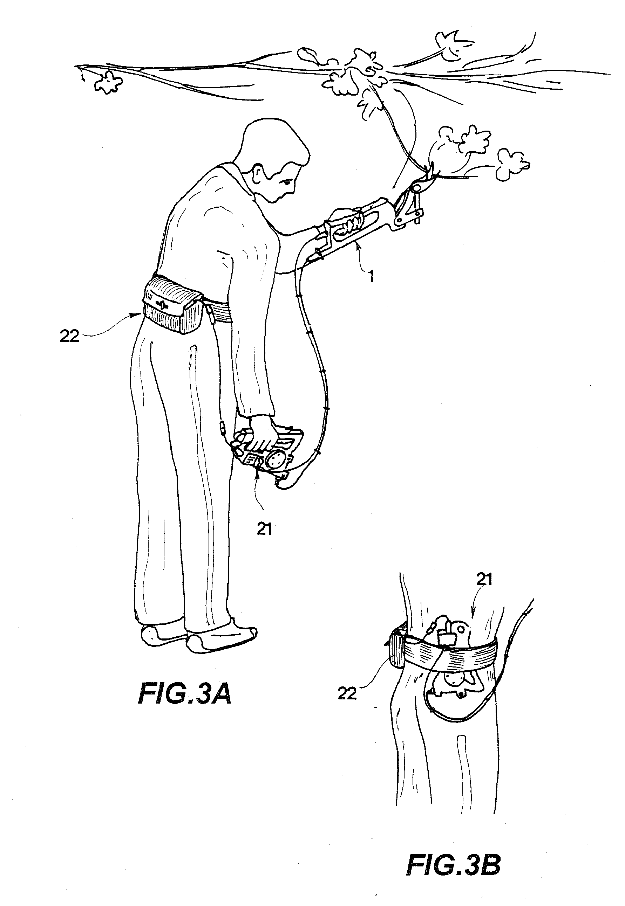

Next, figures 3A and 3B illustrate a first operation mode of a cutting apparatus 20 as the one described hereto.

In said first mode, the user with one hand holds the cutting device 1, operating the required cuts, and with the other hand holds the power unit, by means of a handle provided therefor.

The battery pack 22 could easily be belt-carried.

Alternatively, as it is shown in figure 3B, also the power unit may be belt-carried or placed on the user's back, e.g. in a backpack.

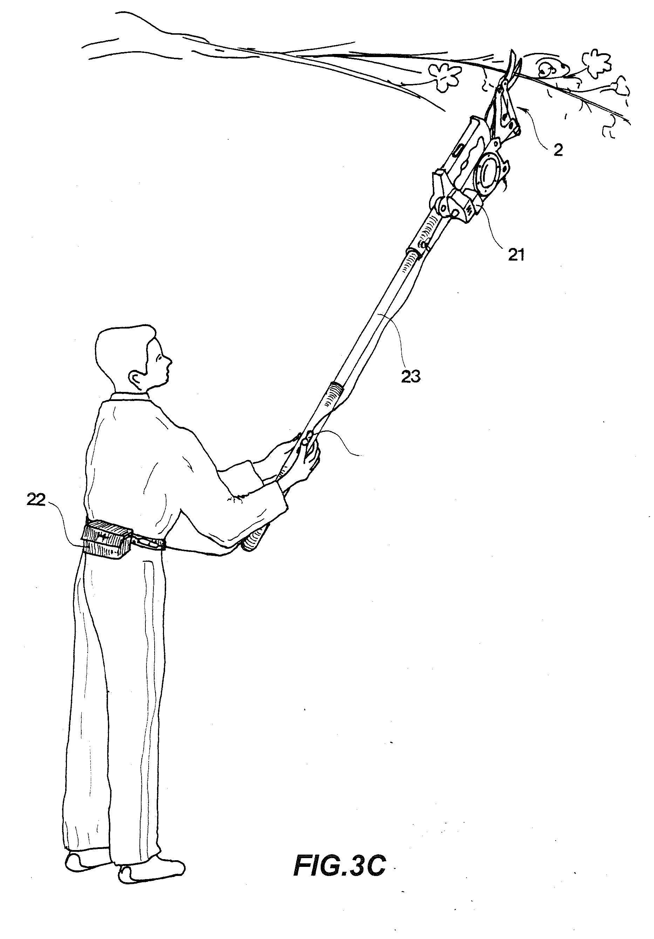

Moreover, advantageously it may be provided that the cutting device 1 is removably connectable to the power unit 21. Thus, optionally with the aid of a collapsible extension rod 23, it also removably connected to the power unit, it will be possible to more easily reach branches at remarkable heights without necessarily using a ladder. Such an operation mode is illustrated in figure 3C.

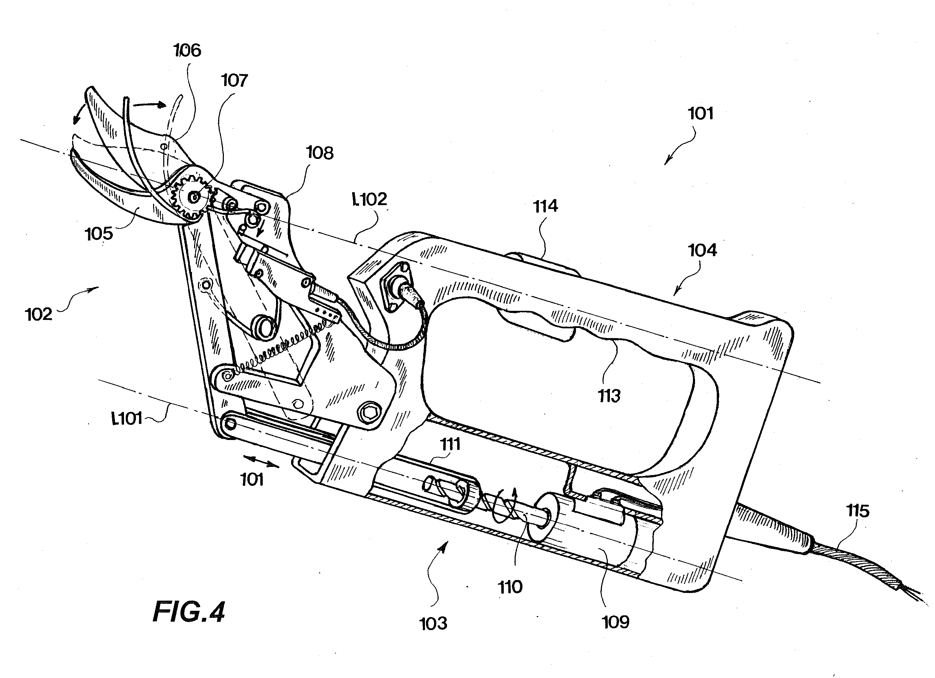

Figure 4 instead refers to a second embodiment of a cutting device according to the present invention, in particular a cutting device 101 that, though preserving the same technical/functional features of the one already described hereto in connection with the first embodiment, differs therefrom in that the housing portion, indicated here by number 103, houses a motor 109, preferably electric.

However, in this case as well the motor 109 could also be of a different kind, e.g. pneumatic.

The motor, when operated, sets in motion the members for transmitting the motion, in this case consisting of a threaded rotating element 110 coupled to an arm 111 which is driven to a translational motion as indicated by arrow F101 in the figure. The returning to a resting position, after having performed a cutting stroke, is ensured by a return spring interposed between the two arms of the scissor of the cutting unit 12.

Also this second embodiment has an arrangement of its constituent parts such as to attain a physical and functional separation thereamong. In particular, the portion 103 for housing the transmission members and the motor is distinct from the handgrip portion 104.

However, as in the preceding case, the arrangement is such that the handgrip is arranged along a line L102, substantially parallel to a line L101 along which there are arranged the motor and the transmitting members.

Moreover, the cutting unit 102 is arranged in a manner such that the fulcrum 107 of the scissor falls just on the handgrip line L102, thereby easing a user's exerting of a force, as already described in the foregoing.

The present invention has hereto been described according to preferred embodiments thereof, given by way of example and without limitative purposes.

It is understood that there could be other embodiments afferent to the same inventive kernel, all to be construed as falling within the protective scope thereof, as defined by the appended claims.

## Claims

1. A mechanized cutting device (1; 101), comprising
* a cutting unit (2; 102); and
* a main body having a housing portion (3; 103) apt to house transmission members (9, 10, 11; 109, 110, 111) for moving said cutting unit (2; 102), and a handgrip portion (4; 104),
* **characterised in that** said handgrip portion (4; 104) is physically distinct from said housing portion (3; 103).

2. The mechanized cutting device (1; 101) according to claim 1, wherein said cutting unit (2; 102) is substantially shaped like a scissor having two arms (5, 6; 105, 106), hinged at a fulcrum pin (7; 107).

3. The mechanized cutting device (1; 101) according to claim 2, wherein a first arm (5; 105) of said two arms (5, 6; 105, 106) is a stationary arm, having one end rigidly connected to a support (8; 108) obtained onto the housing portion (3; 103).

4. The mechanized cutting device (1; 101) according to claim 2 or 3, wherein a second arm (6; 106) of said two arms (5, 6; 105, 106) is a movable arm, having one end (6") mechanically connected to said members (9, 10, 11; 109, 110, 111) for transmitting motion, in a manner such as to allow to the movable arm a reciprocating swinging motion.

5. The mechanized cutting device (1; 101) according to any one of the preceding claims, wherein said handgrip portion (4; 104) comprises a handgrip handle (13; 113) arranged along a first line (L2; L102), said first line being substantially parallel to a second line (L1; L101) along which it is arranged said housing portion (3; 103).

6. The mechanized cutting device (1; 101) according to claim 5 when dependent from claim 2, wherein said cutting unit (2;102) is manufactured and arranged in a manner such that said fulcrum (7; 107) falls along said line (L2; L102), frontally with respect to said handgrip handle.

7. The mechanized cutting device (1) according to any one of the preceding claims, comprising means for the electrical and mechanical connection to a power unit (21).

8. The mechanized cutting device (1) according to claim 7, further comprising means for the removable connection to the power unit (21).

9. The mechanized cutting device (1) according to any one of the claims 1 to 6, wherein said members (9, 10, 11; 109, 110, 111) for transmitting motion comprise a motor (109), it also housed in said housing portion (3; 103).

10. A mechanized cutting apparatus (20), **characterised in that** it comprises a cutting device (1; 101) according to any one of the claims 1 to 9, and a power unit (21; 109) for the operation of said cutting device (1; 101).

11. The mechanized cutting apparatus (20) according to claim 10, wherein said power unit is powered with electric energy.

12. The mechanized cutting apparatus (20) according to claim 11, further comprising a battery pack for the powering of said power unit.

13. The mechanized cutting apparatus (20) according to any one of the claims 10 to 12, further comprising a collapsible extension rod (23) apt to be removably connected to said power unit.
